(19) Europäisches Patentamt

European Patent Office

Office européen des brevets

(11) Veröffentlichungsnummer : **0 008 005**
**B2**

(12) **NEUE EUROPÄISCHE PATENTSCHRIFT**

(45) Veröffentlichungstag der neuen Patentschrift :
20.02.85

(21) Anmeldenummer : 79102356.7

(22) Anmeldetag : 09.07.79

(51) Int. Cl.⁴ : **H 01 G   1/147, H 01 G 13/00**

(54) **Verfahren und Vorrichtung zur Stirnkontaktierung elektrischer Kondensatoren.**

(30) Priorität : 04.08.78 DE 2834348

(43) Veröffentlichungstag der Anmeldung :
20.02.80 Patentblatt 80/04

(45) Bekanntmachung des Hinweises auf die Entscheidung
über den Einspruch : 20.02.85 Patentblatt 85/08

(84) Benannte Vertragsstaaten :
FR GB IT SE

(56) Entgegenhaltungen :
DE-A- 2 126 042
DE-C-   946 302

(73) Patentinhaber : **Siemens Aktiengesellschaft**
**Berlin und München Wittelsbacherplatz 2**
**D-8000 München 2 (DE)**

(72) Erfinder : **Eckl, Albert**
**Tulpenweg 4**
**D-8401 Pfatter (DE)**

EP 0 008 005 B2

## Beschreibung

Die Erfindung betrifft ein Verfahren zur Stirnkontaktierung elektrischer Kondensatoren, bei dem auf die Stirnflächen eines Kondensators eine dünne die Kanten jeweils eines Belages kontaktierende erste Stirnkontaktschicht aus einem höher schmelzenden Metall aufgespritzt wird, nach dem Aufbringen dieser ersten Stirnkontaktschicht auf diese der jeweilige Anschlußdraht aufgelegt und dann eine zweite Kontaktschicht aus einem niedriger schmelzenden Metall aufgespritzt wird, in die der Anschlußdraht eingebettet wird und die mit der ersten Stirnkontaktschicht mechanisch fest und elektrisch leitend verbunden wird.

Aus der DE-OS 21 26 042 ist ein Verfahren zur Befestigung und Kontaktierung von Anschlußdrähten an stirnseitigen Kontaktbrücken elektrischer Kondensatoren bekannt, bei dem die Anschlußdrähte zuerst durch eine an sich bekannte Impulsschweißung an den Kontaktbrücken angeheftet und die Heftstellen hierauf mit Weichlot überspritzt werden. Die Kontaktbrücken auf den Stirnflächen der Kondensatorelemente bestehen dabei aus etwa 0,5 mm dicken, aufgespritzten Zinkschichten, an welche die Anschlußdrähte angeheftet sind. Das aus der flüssigen Phase aufgespritzte Weichlot baut sich konvex über den angehefteten Anschlußdrähten auf und sichert eine mechanisch einwandfreie und elektrisch gut leitende Verbindung zwischen den Anschlußdrähten und den Kontaktbrücken. Bei der Impulsschweißungen, bei der beispielsweise ein verzinnter Kupferdraht an die Kontaktbrücken aus Zink angeheftet wird, sinkt derselbe etwa zur Hälfte seines Durchmessers in das Brückenmetall ein. Durch Aufspritzen eines Weichlots aus einer Zinn-Blei-Legierung, die bekanntlich bei einer niedrigeren Temperatur schmilzt als Zink, wird aus der flüssigen Phase des Weichlots über den Anschlußdraht eine Lötstelle mit einem Durchmesser von etwa 10 mm aufgebaut, die den Anschlußdraht und die Stelle, an welcher er in die Kontaktbrücke eingebettet ist, überdeckt.

Bei diesem bekannten Verfahren ist das Anheften des Anschlußdrahtes an die Kontaktbrücken durch Impulsschweißung zwingend erforderlich, und es wird auch eine relativ große Lotmenge benötigt, die durch den relativ großen Durchmesser von 10 mm der Lötstelle gegeben ist, damit der Anschlußdraht auch ausreichend überdeckt wird.

In der DE-PS 946 302 ist ein Verfahren zur Herstellung elektrisch leitender Verbindungen zwischen äußerst dünnen Metallbelegungen elektrischer Kondensatoren und ihren drahtförmigen Stromzuführungen beschrieben, bei dem an den Stirnseiten der Kondensatoren auf die dünnen Kondensatorbelegungen eine ihnen den Strom flächenhaft zuführende erste, auf diese dann eine zweite Kontaktbrücke aus einem Metall niedrigeren Schmelzpunktes als der des Metalls der ersten Kontaktbrücke aufgebracht und an diese zweite Kontaktbrücke der Stromzuführungsdraht ohne Zuhilfenahme eines besonderen Lötmittels angelötet wird. Die erste Metallbrücke schmilzt bei diesem Löten nicht, hebt sich also dabei auch nicht von der Unterlage ab.

Aus der US-PS 2 172 604 ist es bekannt, daß man auf eine Aluminium-Folie einen Anschlußdraht aus Aluminium auflegt, über den Anschlußdraht Gaze breitet und dann den Anschlußdraht durch Aufspritzen von Aluminium mit der Aluminium-Folie verbindet. Dadurch wird eine für Elektrolytkondensatoren geeignete Verbindung zwischen Belagfolie und Anschlußdraht hergestellt. Eine Stirnkontaktierung der Kondensatorwickel findet dort nicht statt.

In der US-PS 1 179 762 ist das Schoop-Verfahren beschrieben, bei dem u. a. auch mit einem vorgeheizten Preßluftstrom gearbeitet und das flüssige Lotmetall dem Preßluftstrom nach seinem Austritt aus der Düse zugemischt wird. Es ist bekannt, dieses Verfahren zur Herstellung von Stirnkontaktschichten bei elektrischen Kondensatoren zu verwenden.

Die Aufgabe, die der vorliegenden Erfindung zugrunde liegt, besteht bei einem Verfahren der eingangs beschriebenen Art darin, eine einwandfreie mechanische und elektrische Verbindung zwischen dem Anschlußdraht und der höher schmelzenden Kontaktschicht in Serie herzustellen und dabei Lotmetall einzusparen.

Zur Lösung dieser Aufgabe ist das Verfahren der eingangs angegebenen Art erfindungsgemäß dadurch gekennzeichnet, daß die für die zweite Kontaktschicht erforderliche Menge der Schmelze des niedrigschmelzenden Metalls aufgebracht wird, indem ein oben offenes Füllrohr in flüssiges Lotmetall bis zu einer der aufzuspritzenden Lotmenge entsprechenden Länge eingebracht und dabei gefüllt wird, das Füllrohr oben verschlossen und aus dem Lotmetall angehoben wird und das nun im Füllrohr befindliche Lotmetall einer Preßluftdüse zugeführt und dann mittels eines vorgeheizten Preßluftstoßes durch die Düse auf den Anschlußdraht und den diesen umgebenden Bereich der ersten Metallschicht stoßartig aufgespritzt wird.

Bei einer weiteren Lösung dieser Aufgabe ist das Verfahren der eingangs angegebenen Art erfindungsgemäß dadurch gekennzeichnet, daß die für die zweite Kontaktschicht erforderliche Menge der Schmelze des niedrigschmelzenden Metalls aufgebracht wird, indem die gewünschte Menge des flüssigen Lotmetalls in einen Zylinder durch einen Kolben mit einem entsprechenden Kolbenhub eingesaugt, dann einer Spritzdüse zugeführt und dann mittels eines vorgeheizten Preßluftstoßes oder unmittelbar durch den Kolbendruck durch die Düse auf den Anschlußdraht und den diesen umgebenden Bereich der ersten Metallschicht stoßartig aufgespritzt wird.

Vorzugsweise wird der den Anschlußdraht umgebende Bereich gegen die weitere Umgebung seitlich abgedichtet.

Gegenstand der Erfindung ist auch eine Vor-

richtung zur Durchführung der erfindungsgemäßen Verfahren, die dadurch gekennzeichnet ist, daß eine Düse mit einem Rohr für die Zuführung von Preßluft mechanisch fest verbunden ist, daß ein weiteres Rohr für die Zufuhr der erforderlichen Menge des Lotmetalls mittels eines Füllrohres oder einer Kolbenspritze in das Rohr für die Zufuhr der Preßluft mündet, daß Silikon-Gummistreifen zur Begrenzung der seitlichen Ausdehnung der mittels der Düse aufgebrachten Lotschicht angeordnet sind und daß die Düse und die Rohre von Heizwindungen umgeben sind.

Die erste höherschmelzende Metallschicht kann in üblicher Weise mittels Flammspritzverfahren aufgebracht werden. Sie besteht vorzugsweise aus Aluminium. Die zweite Metallschicht besteht vorteilhaft aus einer Zinn-Blei-Legierung, insbesondere aus Weißmetall oder anderen Legierungen mit ähnlich niedrigem Schmelzpunkt. Durch das stoßartige Aufspritzen dieser Metalle verbinden sie sich sehr intensiv mit der höherschmelzenden Metallschicht. Es besteht auch bei einer relativ kleinen Berührungsfläche zwischen den beiden Kontaktschichten eine ausreichend feste Verbindung, so daß der Draht in der zweiten Schicht mechanisch festgehalten wird, auch wenn diese nur einen kleinen Teil der Stirnfläche des Kondensators bedeckt. Gleichzeitig wird der Anschlußdraht durch die zweite Metallschicht umschlossen und intensiv kontaktiert. Die Verfahren sind für Kondensatoren mit relativ großen Stirnflächen vorteilhaft. Dort kann besonders viel Lotmetall eingespart werden, dies um so mehr, weil die zweite, niedrigschmelzende Lotschicht nach dem Stand der Technik relativ dick ausgeführt werden muß, da sie dem anschließend eingeschmolzenen Anschlußdraht die notwendige mechanische Festigkeit vermitteln muß. Die vorgeschlagenen Kontaktierungsverfahren vermeiden außerdem, daß Lotmetall als verfahrenstechnischer Abfall in die Lücken zwischen nebeneinanderliegenden Kondensatoren gespritzt wird und daß Halterahmen und dergleichen Vorrichtungen bespritzt werden, wie das beim sonst üblichen Flammspritzverfahren nicht zu vermeiden ist.

Die Vorerhitzung der Preßluft gewährleistet, daß das Metall mit der erforderlichen hohen Temperatur aufgespritzt wird. Um schlecht anhaftenden Metallstaub in der weiteren Umgebung des Anschlußdrahtes zu vermeiden, wird der den Anschlußdraht umgebende Bereich gegen die weitere Umgebung seitlich abgedichtet. Hierzu ist beispielsweise ein Silikongummiring geeignet. Es können auch Silikongummistreifen verwendet werden, die parallel zum Anschlußdraht angeordnet werden.

Die zu verspritzende Lotmenge wird dadurch vorgegeben, daß ein oben offenes Füllrohr in das flüssige Lotmetall bis zu einer der aufzuspritzenden Lotmenge entsprechenden Länge eingetaucht und dabei geöffnet wird, daß das Füllrohr oben verschlossen und aus dem Lotmetall angehoben wird und daß das nun im Füllrohr befindliche Lotmetall der Preßluftdüse zugeführt wird. Dabei werden zweckmäßigerweise sowohl die Preßluftdüse als auch die Zuleitung geheizt. Temperatur und Spritzenergie können durch geeignete Wahl des Innendurchmessers und der Länge des Zuleitungsrohres zu der Düse beeinflußt werden. Lötmittel können auf die erste Metallschicht aufgebracht oder der Druckluft beigemischt werden.

Bei dem Verfahren nach Anspruch 2 besteht die Dosierung des Lotmetalls darin, daß die gewünschte Menge des flüssigen Lotes in einen Zylinder durch einen Kolben mit einem entsprechenden Kolbenhub eingesaugt und dann einer Düse zugeführt wird. Dabei kann das Aufspritzen mittels Druckluft oder unmittelbar durch einen Kolbendruck erfolgen.

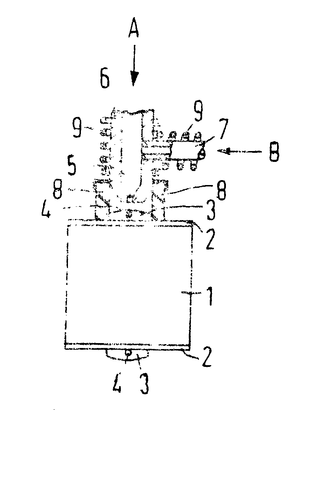

Die Erfindung wird nun anhand einer Figur näher erläutert. Sie ist nicht auf das in der Figur gezeigte Beispiel beschränkt. Die Figur erläutert die erfindungsgemäßen Verfahren anhand einer schematisch in teilweise geschnittener und gebrochener Ansicht dargestellten Vorrichtung.

Auf einen Kondensator 1, welcher Kunststoffolien und Beläge enthält, wurden die Kanten eines Belages durch jeweils eine der höherschmelzenden Stirnkontaktschichten 2 kontaktiert. Auf diese relativ dünnen Stirnkontaktschichten 2 wurden Anschlußdrähte 4 aufgelegt. Durch eine Düse 5 wurde ein Gemisch aus Luft und Lotmetall auf die obenliegende höherschmelzende Kontaktschicht 2 aufgespritzt. Dadurch wurde der Anschlußdraht 4 in eine zweite Kontaktschicht 3 aus niedrigschmelzendem Lot eingebettet und mit der ersten Kontaktschicht 2 mechanisch fest und elektrisch leitend verbunden. Die Preßluft wird in Richtung A durch das Rohr 6 eingeführt. Das Lotmetall wird durch die vorbeistreichende Preßluft aus dem Rohr 7 in Richtung B angesaugt. Silikongummistreifen 8 sind parallel zum Anschlußdraht 4 angeordnet. Sie begrenzen einerseits die seitliche Ausdehnung der zweiten Kontaktschicht 3 und dienen andererseits als Anschlag und Abstandhalter für die Kondensatoren 1. Heizwindungen 9 halten die Düse 5 und die Zuleitungsrohre 6 und 7 auf der erforderlichen Temperatur.

**Ansprüche**

1. Verfahren zur Stirnkontaktierung elektrischer Kondensatoren, bei dem auf die Stirnflächen eines Kondensators (1) eine dünne die Kanten jeweils eines Belages kontaktierende erste Stirnkontaktschicht (2) aus einem höher schmelzenden Metall aufgespritzt wird, nach dem Aufbringen dieser ersten Stirnkontaktschicht (2) auf diese der jeweilige Anschlußdraht (4) aufgelegt und dann eine zweite Kontaktschicht (3) aus einem niedriger schmelzenden Metall aufgespritzt wird, in die der Anschlußdraht (4) eingebettet wird und die mit der ersten Stirnkontaktschicht (2) mechanisch fest und elektrisch leitend verbunden wird, dadurch gekennzeichnet, daß die für die zweite Kontaktschicht (3) erforderliche Menge der Schmelze des niedrigschmelzenden Metalls aufgebracht wird, indem ein oben offenes Füllrohr in flüssiges Lotmetall bis zu einer der aufzuspritzenden Lotmenge entsprechenden Länge eingebracht und dabei gefüllt wird, das Füllrohr oben verschlossen und aus dem Lotmetall angehoben wird und das nun im Füllrohr befindliche Lotmetall einer Preßluftdüse zugeführt und dann mittels eines vorgeheizten Preßluftstoßes durch die Düse auf den Anschlußdraht (4) und den diesen umgebenden Bereich der ersten Metallschicht (2) stoßartig aufgespritzt wird.

2. Verfahren zur Stirnkontaktierung elektrischer Kondensatoren, bei dem auf die Stirnflächen eines Kondensators (1) eine dünne die Kanten jeweils eines Belages kontaktierende erste Stirnkontaktschicht (2) aus einem höher schmelzenden Metall aufgespritzt wird, nach dem Aufbringen dieser ersten Stirnkontaktschicht (2) auf diese der jeweilige Anschlußdraht (4) aufgelegt und dann eine zweite Kontaktschicht (3) aus einem niedriger schmelzenden Metall aufgespritzt wird, in die der Anschlußdraht (4) eingebettet wird und die mit der ersten Stirnkontaktschicht (2) mechanisch fest und elektrisch leitend verbunden wird, dadurch gekennzeichnet, daß die für die zweite Kontaktschicht (3) erforderliche Menge der Schmelze des niedrigschmelzenden Metalls aufgebracht wird, indem die gewünschte Menge des flüssigen Lotmetalls in einen Zylinder durch einen Kolben mit einem entsprechenden Kolbenhub eingesaugt und dann einer Spritzdüse zugeführt und dann mittels eines vorgeheizten Preßluftstoßes oder unmittelbar durch den Kolbendruck durch die Düse auf den Anschlußdraht (4) und den diesen umgebenden Bereich der ersten Metallschicht (2) stoßartig aufgespritzt wird.

3. Verfahren nach Anspruch 1 oder 2, dadurch gekennzeichnet, daß der den Anschlußdraht (4) umgebende Bereich gegen die weitere Umgebung seitlich abgedichtet wird.

4. Vorrichtung zur Durchführung des Verfahrens gemäß einem der Ansprüche 1 bis 3, dadurch gekennzeichnet, daß eine Düse (5) mit einem Rohr (6) für die Zuführung von Preßluft mechanisch fest verbunden ist, daß ein weiteres Rohr (7) für die Zufuhr der erforderlichen Menge des Lotmetalls mittels eines Füllrohres oder einer Kolbenspritze in das Rohr (6) für die Zufuhr der Preßluft mündet, daß Silikon-Gummistreifen (8) zur Begrenzung der seitlichen Ausdehnung der mittels der Düse (5) aufgebrachten Lotschicht (3) angeordnet sind und daß die Düse (5) und die Rohre (6, 7) von Heizwindungen (9) umgeben sind.

## Claims

1. Process for the end-contacting of electrical capacitors, in which a thin first end-contact layer (2), which contacts the respective edges of a coating and consists of a higher-melting metal, is sprayed onto the end faces of a capacitor (1), in which, after the application of this first end-contact layer (2), the respective connecting wire (4) is placed thereon and a second contact layer (3), consisting of a lower-melting metal, is then sprayed on, in which second contact layer (3) the connecting wire (4) is embedded and which is connected to the first end-contact layer (2) so as to be mechanically stable and electrically conductive, characterised in that the amount of the melt of the lower-melting metal which is required for the second contact layer (3), is applied in that a filling pipe which is open at the top is inserted into liquid solder metal for a length corresponding to the amount of solder which is to be sprayed on, and thereby filled, the filling tube is closed at the top and lifted out of the solder metal, and the solder metal which is now in the filling tube is supplied to a compressed-air nozzle and then intermittently sprayed onto the connecting wire (4) and the region of the first metal layer (2) which surrounds said connecting wire, by means of preheated compressed-air percussion through the nozzle.

2. A process for the end-contacting of electrical capacitors, in which a thin first end-contact layer (2), which contacts the respective edges of a coating and consists of a higher-melting metal, is sprayed onto the end faces of a capacitor (1), in which, after the application of this first end-contact layer (2), the respective connecting wire (4) is placed thereon and a second contact layer (3) consisting of a lower-melting metal is then sprayed on, in which second contact layer (3) the connecting wire (4) is embedded and which is connected to the first end-contact layer (2) so as to be mechanically stable and electrically conductive, characterised in that the amount of the melt of the lower-melting metal which is required for the second contact layer (3) is applied in that the required amount of the liquid solder metal is drawn into a cylinder by means of a piston having a corresponding piston stroke and is then supplied to a spray nozzle and then intermittently sprayed onto the connecting wire (4), and the region of the first metal layer (2) which surrounds the connecting wire, by means of a pre-heated compressed-air percussion, or directly through the nozzle by the pressure of the piston.

3. A process according to Claim 1 or 2, characterised in that the region surrounding the connecting wire (4) is laterally sealed off from the further surroundings.

4. Apparatus for carrying out the process according to one of Claims 1 to 3, characterised in that a nozzle (4) is mechanically tightly connected to a pipe (6) for the supply of compressed air ; that a further pipe (7) for the supply of the required amount of the solder metal by means of a filling tube or a piston injector, opens into the pipe (6) for the supply of the compressed air ; that silicone rubber strips (8) are provided to limit the lateral spread of the solder layer (3) which is applied by means of the nozzle (5) ; and that the nozzle (5) and the pipes (6, 7) are surrounded by heating coils (9).

**Revendications**

1. Procédé pour établir les contacts frontaux de condensateurs électriques, selon lequel on projette sur les faces frontales du condensateur (1) une première couche mince de contact frontal (2), contactant les bords respectivement d'une armature et constituée en un métal à point de fusion élevé, et, après le dépôt de cette première couche de contact frontal (2), on dépose sur cette dernière le fil de connexion respectif (4) et on projette ensuite une seconde couche de contact (3) constituée en un métal à point de fusion plus bas et dans laquelle on insère le fil de connexion (4) et que l'on relie d'une manière mécaniquement rigide et électriquement conductrice la première couche de contact frontal (2), caractérisé en ce que l'on dépose la quantité, nécessaire pour la seconde couche de contact (3), de la masse fondue du métal à point de fusion plus bas en introduisant un tube de remplissage, ouvert à sa partie supérieure, dans la soudure liquide jusque sur une longueur correspondant à la quantité de soudure devant être projetée et en le remplissant, en obturant le tube de remplissage à sa partie supérieure et en le soulevant hors de la soudure, et en envoyant la soudure alors située dans le tube de remplissage, à une buse à air comprimé et en projetant alors, par à-coups, cette soudure à l'aide d'une impulsion d'air comprimé préchauffé, à l'aide d'une buse, sur le fil de connexion (4) et sur la région, entourant ce dernier, de la première couche métallique (2).

2. Procédé pour établir les contacts frontaux de condensateurs électriques, selon lequel on projette sur les faces frontales d'un condensateur (1) une première couche mince de contact frontal (2), contactant les bords respectivement d'une armature et constituée en un métal à point de fusion élevé, et, après le dépôt de cette première couche de contact frontal (2), on dépose sur cette dernière le fil de connexion respectif (4) et on projette ensuite une seconde couche de contact (3) constituée en un métal à point de fusion plus bas et dans laquelle on insère le fil de connexion (4) et que l'on relie d'une manière mécaniquement rigide et électriquement conductrice à la première couche de contact frontal (2), caractérisé en ce qu'on projette la quantité nécessaire pour la seconde couche de contact (3), de la masse fondue du métal à point de fusion inférieur, en aspirant la quantité désirée de la soudure liquide dans un cylindre à l'aide d'un piston possédant une course correspondante et en l'envoyant ensuite à une buse de projection et en projetant alors la soudure par à-coups, au moyen d'une impulsion d'air comprimé préchauffé ou directement sous l'effet de la pression du piston, à l'aide de la buse, sur le fil de connexion (4) et sur la région, entourant ce dernier, de la première couche métallique (2).

3. Procédé selon la revendication 1 ou 2, caractérisé en ce que la région entourant le fil de connexion (4) est étanchéifiée latéralement vis-à-vis de l'environnement extérieur.

4. Dispositif pour la mise en œuvre du procédé selon l'une des revendications 1 à 3, caractérisé en ce qu'une buse (5) est reliée de manière mécaniquement rigide à un tube (6) servant à l'amenée de l'air comprimé, qu'un autre tube (7) servant à l'amenée de la quantité nécessaire de la soudure débouche, au moyen d'un tube de remplissage ou d'une seringue, dans le tube (6) servant à l'amenée de l'air comprimé, qu'on dispose des bandes en caoutchouc au silicone (8) pour limiter l'extension latérale de la couche de soudure (3) déposée au moyen de la buse (5) et que la buse (5) et les tubes (6, 7) sont entourés par des spires chauffantes (9).